## Europäisches Patentamt
## European Patent Office
## Office européen des brevets

(19)

(11) Veröffentlichungsnummer: **0 196 089**
**B1**

(12)

# EUROPÄISCHE PATENTSCHRIFT

(45) Veröffentlichungstag der Patentschrift: **12.09.90**

(51) Int. Cl.⁵: **A 01 G 3/06**

(21) Anmeldenummer: **86104166.3**

(22) Anmeldetag: **26.03.86**

(54) Rasenkantenschneider.

(30) Priorität: **27.03.85 DE 3511036**

(43) Veröffentlichungstag der Anmeldung:
**01.10.86 Patentblatt 86/40**

(45) Bekanntmachung des Hinweises auf die
Patenterteilung:
**12.09.90 Patentblatt 90/37**

(84) Benannte Vertragsstaaten:
**BE DE FR GB NL**

(56) Entgegenhaltungen:
**DE-A-1 943 366**
**DE-C- 861 482**
**GB-A-2 033 711**
**US-A-1 484 755**
**US-A-2 949 670**
**US-A-4 052 791**

(73) Patentinhaber: **Ries, Hans**
**Gathe-Strasse 60**
**Mühlheim a.d. Ruhr (DE)**

(72) Erfinder: **Ries, Hans**
**Gathe-Strasse 60**
**Mühlheim a.d. Ruhr (DE)**

(74) Vertreter: **Kiefer, Winfried, Dipl.-Phys.**
**Kasinostrasse 13**
**D-4100 Duisburg 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 196 089 B1

## Beschreibung

Die Erfindung betrifft einen Rasenkantenschneider mit einer Klinge und einer Handhabe, insbesondere zum Schneiden des Rasens an Platten.

Rasenkantenschneider dienen dazu, an Rasenflächen eine optisch gefällige Kante zu schneiden. Die Kante eines Rasens kann entweder gerade oder auch eine bogenförmige Linie sein.

Für große Rasenflächen kommen Rasenkantenschneider zum Einsatz, die einen Fahrrahmen aufweisen, für den die Rasenkante bzw. der Rasen und der Gehweg die Führung übernehmen, so daß durch auf dem Fahrahmen befindliche Messer die entsprechende Schnittkante geschnitten wird (D-C-210 576, DE-B-1 074 909, DE-C-1 260 223, DE-U-81 09 947.9, US-A-2 978 041).

Es ist weiterhin bekannt (US-A-2 978 041), die an einem Fahrrahmen angelenkte Klinge zusätzlich Oszillationsschwingungen durchführen zu lassen. zu lassen.

Es ist auch bekannt (D-C-176 779, D-C-209 328, D-C-861 482), das Messer als Scheibe auszubilden und im Abstand vor ihm eine Führungsrolle bzw. ein Führunggsrad vorzusehen, so daß sich ebenfalls eine Führung für das Messer ergibt.

Es ist auch bekannt (US-A-2 872 732), das Messer auf der Verlängerung der Achse des Führungsrades anzuordnen.

Weiterhin ist es bekannt (DE-U-74 29 695, das Messer zugleich als Führungsrad auzubilden, das beim Abrollen auf dem Rasen überstehendes Gras abschneidet.

Es ist zusätzlich bekannt, bei Rasenkantenschneidern (GB-A-20 33 711), das Messer bzw. die Klinge nach Art einer Kreisscheibe auszubilden, die am Rande in einen als Hebel dienenden Ansatz ausläuft. Die Klinge ist exzentrisch zur Achse der Scheibe in einer Halterung gelagert, die auf den Rasen bzw. die Rasenkante aufgesetzt wird. Anschließend wird mit dem Fuß der Ansatz belastet, so daß das Messer aufgrund seiner exzentrischen Lagerung in den Rasen eindringt und das Gras schneidet.

Anstelle einer Führungsrolle kann auch ein Flachprofil mit einem Schlitz vorgesehen sein, durch den das Messer hindurchragt (DE-A-1 943 366).

Es ist auch bekannt (US-A- 4 052 791), das Flachprofil als Trittplatte auszubilden, durch die das Messer bzw. die Klinge ebenfalls hindurchgreift. Dieser Rasenkantenschneider wird in der Weise betätigt, daß die Klinge durch Druck mittels des Fußes auf die Trittplatte in das Erdreich gedrückt wird, während von Hand der an der Trittplatte angelenkte Schaft gegriffen wird.

Die eine Zwangsführung aufweisenden Rasenkantenschneider arbeiten problemlos an längeren geraden und bogenförmigen Kanten, solange Bandeisen und dergleichen die Einfassung zu den Wegen oder anderen Flächen bilden. Falls sie an Rasenflächen durch Platten, Steine oder dergleichen gebildet ist, deren die äußere Begrenzung bildenden Kanten nicht mehr fluchten, treten insofern Probleme auf, da dann zum Beispiel eine gerade Rasenkante nicht mehr geschnitten werden kann.

Das Problem liegt vor allem darin, daß die Führungsrollen und dergleichen von Kanten geführt werden, die zu den äußeren Kanten, an denen der jeweilige Schnitt erfolgt, den gleichen Abstand haben wie die Messer von den Führungsrollen.

Dieses Prinzip der Zwangsführung ist vor allem dann nicht mehr anwendbar, wenn die Rasenkante an zueinander distanzierten Rasentrittsteinen oder auch an Befahrplatten, die nicht mehr fluchten, geschnitten werden soll, bzw. die zu schneidene Rasenkante zu kurz ist, so daß dieses bekannte Prinzip der Führung von vornherein nicht mehr praktikabel ist.

Es ist auch nicht möglich, an den Rändern flach liegendes und über sie hinaus ragendes Gras mit diesen bekannten Rasenkantenschneidern zu schneiden.

Dies gilt auch für diejenigen Rasenkantenschneidern, die nach Art eines Messers mit Wellenschliff ausgebildet sind (US-A-2 872 732) und lediglich aus einer Klinge und einer Handhabe bestehen.

Die Klinge wird mittels der Handhabe in den Boden bzw. den Rasen gedrückt und störende Wurzeln bzw. Stengeln werden durch Sägen entfernt. Dies ist jedoch nur bei verholzten Pflanzenteilen und Wurzeln möglich, die der sägenden Bewegung nicht ausweichen können, was Grashalme ohne weiteres tun.

Der Erfindung liegt die Aufgabe zugrunde, den Rasenkantenschneider der eingangs erwähnten Art so auszubilden, daß er stets eine einwandfreie Schnittkante gewährleistet, insbesondere ein einwandfreies Abschneiden von flach liegendem und über die Ränder hinausragendem Gras sicherstellt.

Diese Aufgabe wird erfindungsgemäß dadurch gelöst, daß der Anschluß für die Handhabe mit der Klinge verschweißt ist, die Schneide aus zwei gekrümmten Abschnitten besteht, wobei der Schneidenabschnitt der Spitze der Klinge eine konvexe Krümmung aufweist, die Schneide der Klinge ausgehend vom Anschluß der Handhabe bogenförmig konvex verläuft und bogenförmig konkav im Bereich der Spitze der Klinge ausgebildet ist die Spitze als mondsichelartiger Abschnitt ausgebildet ist, die Spitze der Klinge und der bogenförmig konkave Bereich der Schneide unterhalb der Verlängerung der Mittellinie des Anschlusses für die Handhabe angeordnet sind die Schneide der Klinge ballig ist und die Klinge einen bogenförmig konvexen Rücken hat.

Durch diese Maßnahmen wird erreicht, daß die Schneide aufgrund ihrer Balligkeit mit der Kante der betreffenden Platte nach dem Prinzip der Schere zusammenarbeitet wobei gewissermaßen die Kante der Platte die feststehende Schneide der Schere bildet.

Beim Schneiden einer Rasenkante wird der erfindungsgemäße Rasenkantenschneider mit der Spitze der Klinge seitlich beispielsweise an einer Platte vorbei in das Erdreich gedrückt, wobei die Schneide aufgrund ihrer Balligkeit in Kontakt mit der Seitenfläche der Kante tritt und die Klinge in Kontakt mit der Platte bleibt. Durch Verschwenken der Handhabe in Richtung zum Erdreich erfolgt eine Drehbewegung um eine Achse, die im Bereich der Spitze verläuft. Bei diesem Verschwenken werden aufgrund der Ausbildung der Schneide die überstehenden Grashalme teilweise in dem konkaven Abschnitt der Schneide gesammelt und einwandfrei abgeschnitten.

Um das Eindringen in den Boden zu erleichtern, hat die Klinge den bogenförmigen konvexen Rükken, wobei die Spitze als mondsichelartiger Abschnitt ausgebildet ist.

Da die Spitze der Klinge und der bogenförmige konkave Bereich der Schneide unterhalb der Verlängerung der Mittellinie des Anschlusses für die Handhabe ausgebildet sind, ist auch ein längeres manuelles Arbeiten bei fast aufrechter Körperhaltung nicht anstrengend.

Die Erfindung ist in der Zeichnung anhand eines Ausführungsbeispiels erläutert.

Es zeigen.

Figur 1 eine Draufsicht auf das Ausführungsbeispiel und

Figur 2 einen Schnitt durch die Schneide gemäß II — II in Figur 1.

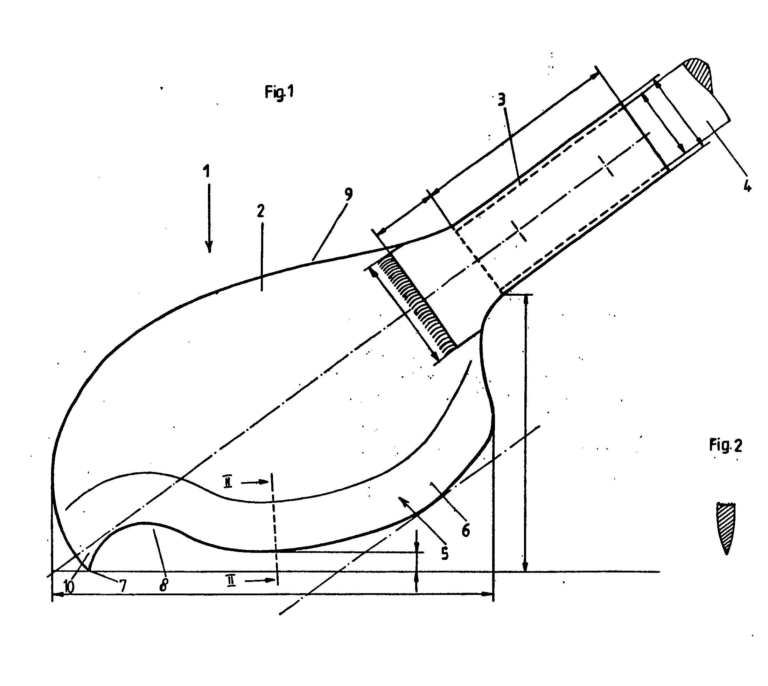

In Figur 1 ist mit 1 der erfindungsgemäße Rasenkantenschneider bezeichnet. Er weist eine Klinge 2, einen Anschluß 3 für eine Handhabe und die im Ausschnitt dargestellte Hanehabe 4 auf.

Vom Anschluß 3, der mit der Klinge 2 verschweißt ist, verläuft die Schneide 5 zunächst bogenförmig konvex. Dieser Abschnitt ist mit 6 bezeichnet.

An diesen Abschnitt anschließend läuft die Schneide bogenförmig konkav in die Spitze 7 aus. Der bogenförmig konkave Abschnitt ist mit 8 bezeichnet.

Von der Spitze 7 verläuft der Rücken 9 der Schneide bogenförmig konvex in den Anschluß 3.

In Figur 1 ist die Mittelachse des Anschlusses und ihre Verlängerung strichpunktiert gezeichnet. die spitze 7 befindet sich unterhalb dieser Mittellinie und bildet einen mondsichelförmigen Bereich 10, während der konkave Abschnitt der Schneide die Verlängerung der Mittelachse von der Seite der Spitze her tangiert.

Durch diese Maßnahmen ist ein leichtes manuelles Handhaben und gleichzeitig ein sauberes Schneiden der Rasenkante an Trittsteinen und dergleichen möglich.

Dies gilt selbstverständlich für die anderen üblichen Begrenzungen von Rasenflächen, auch wenn die Kanten nicht mehr fluchten.

Das Ausführungsbeispiel in Figur 1 ist im Maßstab 1:1 dargestellt, so daß die Abmessungen ohne weiteres der Figur entnommen werden können.

Der erfindunggemäße Rasenkantenschneider kann aus geschmiedetem Stahl oder auch aus gegossenem Stahl bestehen, wobei im letzteren Falle die Schneide nachträglich ballig geschliffen ist.

## Patentanspruch

Rasenkantenschneider (1) mit einer Klinge (2) und einer Handhabe (4), insbesondere zum Schneiden des Rasens an Platten,

dadurch gekennzeichnet, daß der Anschluß (3) für die Handhabe (4) mit der Klinge (2) verschweißt ist.

die Schneide (5) der Klinge (2) aus zwei gekrümmten Abschnitten besteht, wobei der Schneidenabschnitt der Spitze (7) der Klinge (2) eine konvexe Krümmung aufweist,

die Schneide (5) der Klinge (2) ausgehend vom Anschluß der Handhabe bogenförmig konvex verläuft und bogenförmig konkav im Bereich der Spitze (7) der Klinge ausgebildet ist,

die Spitze (7) der Klinge (2) als mondsichelartiger Abschnitt (10) ausgebildet ist, die Spitze der Klinge (2) und der bogenförmig konkave Bereich (8) der Schneide unterhalb der Verlängerung der Mittellinie des Anschlusses für die Handhabe (5) angeordnet sind.

die Schneide (5) der Klinge (2) ballig ist

und die Klinge (2) einen bogenförmig konvexen Rücken (9) hat.

## Revendication

Dispositif (1) pour couper le bord d'un gazon, comprenant une lame (2) et un manche (4), notamment pour couper le gazon de plate-bandes,

caractérisé en ce que le raccord (3) destiné au manche (4) est soudé à la lame (2),

le tranchant (5) de la lame (2) est constitué par deux sections courbes, la section de coupe de la pointe (7) de la lame (2) présentant une courbure convexe,

le tranchant (5) de la lame (2) qui part du raccord pour le manche est de forme courbe convexe, et constitué sous une forme courbe concave dans la région de la pointe (7) de la lame,

la pointe (7) de la lame (2) est constituée par une section en forme de faucille (10),

la pointe de la lame (2) et la région de forme courbe concave (8) du tranchant sont disposées au-dessous du prolongement de l'axe médian du raccord pour le manche (4),

le tranchant (5) de la lame (2) est de forme bombée,

et la lame (2) présente un côté arrière (9) de forme courbe convexe.

## Claim

Lawn border cutting device (1) with a blade (2) and a handle (4), especially designed for mowing lawn edges close to pavements,

characterised in that the connecetion (3) of the handle (4) to the blade (2) is welded, the cutting edge of the blade (2) consists of two curved sections, with the cutting edge section of the nose (7) of the blade (2) having a convex curvature,

starting from the connection of the handle the cutting edge (5) of the blade (2) has a convex curvature and a concave curvature at the nose,

the nose (7) of the blade (2) is sickle-shaped (10),

the nose of the blade (2) an the concavely curved section of the cutting edge have been placed below the extension of the center line (8) of the connection for the handle (4),

the cutting edge (5) of the blade (2) being provided with a crown and the back (9) of the blade (2) has a convex curvature.

Fig.1

Fig.2

1